# EUROPEAN PATENT SPECIFICATION

(11) **EP 4 506 197 B1**
(45) Date of publication and mention of the grant of the patent: **18.11.2026**
(21) Application number: 23190579.5
(22) Date of filing: 09.08.2023
(51) Int. Cl.: B60K 1/02, B60K 7/00, B60K 1/00, F16H 3/54, F16H 1/20, F16H 3/78

(54) **A WHEEL DRIVE UNIT TO BE FITTED ON A CHASSIS OF A HEAVY-DUTY VEHICLE**
RADANTRIEBSEINHEIT ZUR MONTAGE AN EINEM FAHRGESTELL EINES SCHWERLASTFAHRZEUGS
UNITÉ D'ENTRAÎNEMENT DE ROUE DESTINÉE À ÊTRE MONTÉE SUR UN CHÂSSIS D'UN VÉHICULE UTILITAIRE LOURD

(43) Date of publication of application: 12.02.2025
(73) Proprietor: Volvo Truck Corporation, 405 08 Göteborg (SE)
(72) Inventor: BARILLOT, Thomas, 69440 MORNANT (FR)
(74) Representative: Lavoix

(56) References cited:
- EP-A1- 4 238 797
- DE-A1- 102019 206 950
- DE-A1- 102021 203 043
- DE-A1- 102022 108 340

## Description

### TECHNICAL FIELD

The invention relates generally to electromobility applied to heavy-duty vehicles. In particular aspects, the invention relates to a wheel drive unit for a heavy-duty vehicle. The invention can be applied in heavy-duty vehicles, such as trucks, buses, boats and construction equipment. Although the invention may be described with respect to a particular vehicle, the invention is not restricted to any particular vehicle.

### BACKGROUND

Electromobility has been a key concern for vehicle manufacturers in recent years, particularly since the introduction of low-emission zones in city centers and increasingly restrictive CO2 emissions standards.

As a result, Internal Combustion Engines (ICEs) are replaced by electric motors. In the sector of heavy-duty vehicles such as trucks, the electric motor is almost positioned in the same place as an internal combustion engine, i.e. under the truck cab. This means that the transmission is the same.

However, it is obvious that having the electric motor far away from the wheels leads to efficiency losses in the transmission and therefore has an impact on the vehicle's performances and on overall range. It also decreases the available space for batteries as the space between the frame rails is taken/occupied by the transmission/propeller shaft.

This is why the trend today is to have the electric motor(s) as close as possible to the wheels, directly on the axle. This is known as an electric axle or 'E-axle' configuration. As well as improving performance, this solution frees up space between the vehicle's longitudinal rails, as there is no longer a propeller shaft. All this available space can be used to house batteries, which are then protected by the chassis in the event of a crash. It can also be beneficial for Bodybuilder installation/fitting.

One of the challenges for designers is to come up with an electric axle that fits perfectly within the vehicle. To do that, the axle assembly must be as compact as possible, so as not to interfere with other vehicle features, such as the suspension or braking system.

Most of E-motors are designed to run in high speed/low torque conditions vs an internal combustion engine which is running in high torque low speed condition. A high gear ratio is needed to ensure the torque demand at start. Also, having a fixed gear ratio would mean that in cruising conditions, the E-motor runs in high speed/low torque conditions, which is not optimal. These high-speed conditions also increase stress to the gearbox gears, bearings and seal rings, reducing gearbox durability. As a result, a wide gear reduction ratio (typically between 20 and 50) is provided for compensating this situation. This wide gear reduction ratio enables to reach the torque demand at the wheels in all situations, including when starting the vehicle from a stop on a hill. This wide reduction ratio is achieved by several reduction stages, which consequently requires space.

To ensure best efficiency in many conditions as well as durability, several other gear ratios are needed. A high-speed gear box with high-speed gears also creates lubrication problems. Indeed, a gear rotating too rapidly might not be lubricated correctly since the oil on each teeth root is centrifugally ejected from the gear, reducing oil quantity when gear teeth engaged with mating gear teeth. It creates metal-to-metal contact, heat generation, and consequently mechanical irreversible damages.

Document DE 10 2022 108340 A1 discloses, in the opinion of the Examining Division of the European Patent Office, an axle falling within the wording of the pre-characterizing portion of claim 1. In particular it discloses a drive arrangement with two wheel shafts, a differential, a planetary gear train connected to the differential and two electric motors, in which each electric motor is connected to the planetary gear train.

### SUMMARY

A first aspect of the invention concerns an axle according to claim 1.

The first aspect of the invention may seek to provide a wheel drive unit capable of ensuring good drivability conditions in every situation (start, mid-range speed, cruising, etc.), while being very compact to facilitate the integration into the vehicle and leave some space for other vehicle functions. The optimum system performance and efficiency is to have a multispeed transmission between E-motor(s) and the wheels. The optimum system, in terms of feature/complexity ratio, is a 3-gears system (1 to start, 1 to cruise and 1 for mid speed ranges).

The proposed design/architecture will be mirror-able to offer a cost optimized solution (for cost-oriented customers) and a feature optimized solution (for premium features oriented customers) with same (or similar) components. It is also ready for future technology steps (e.g. torque vectoring).

A technical benefit may include reducing the drivetrain mass, thereby improving customer payload. This could also allow to achieve the same payload with a different truck configuration. Typically, a 4*2 truck (two axles, only rear wheels driven) provided with such electric drivetrain could offer the same payload as a 6x2T configuration (Three axles, 1^{st} rear axle is driven) equipped with another drivetrain, which would allow reducing even more the total vehicle cost (First 'E-axle' vehicles will be 6x2T, with the Tag axle (third axle) being used to compensate for battery and E-axle mass. An 'E-axle' with a lower mass can allow to remove this third axle and come back to a traditional 4x2 configuration.

The proposed architecture is much more compact than other designs. It also has smaller components and a lower overall mass. It is also designed to have simpler and fewer components to improve the manufacturing costs. As a result, the proposed architecture/design improves production scale-up and localization with a lower number of parts, easier assemblies without bearing settings and consequently much lower investments levels.

Thanks to an enhanced compacity, the proposed architecture is way easier to install on other vehicle layouts. This electric drive train is compatible with many different suspension systems and vehicle designs, which means that a multitude of different vehicles can be powered from this electric drivetrain, which requires only one assembly line.

According to a preferred embodiment, there is only one gearbox per each wheel drive unit.

Advantageous but optional features of the axle according to the invention are specified in claims 2 to 10.

When the gearbox is a planetary gear train, in order to maximize system efficiency and durability, the gearbox is designed so that a balance/equilibrium of the forces is provided between gear loads. This force balance allows to get smaller bearings (hence to save cost, mass, and improve efficiency). Smaller bearing loads (due to force balancing) also allows to move to aluminum housing instead of CAST iron, saving mass, cost, machining time, and corrosion protection. The proposed architecture is balancing forces in many areas to get small bearings, aluminum housings and higher efficiency
When each wheel drive unit comprises a high-speed retarder, this retarder consists of shearing a fluid, e.g. oil, in-between two wavy disks (disks with cavities), thereby creating a resistant torque. The positioning of this retarder will balance the 1^{st} gear axial loads. This additional retardation system can be useful when batteries are full, or to improve the State of Charge (SoC) windows of the batteries, allowing to have smaller batteries for the same usable energy, saving space, mass, and cost.

According to a second aspect of the invention, a heavy-duty vehicle, comprising an axle to which it is referred to above, is provided.

In some examples, the electric motor(s) of the wheel drive unit is (resp. are) located behind the differential, that is on the rear side along the longitudinal direction of the vehicle. A technical benefit may include that one side of the E-axle remains free of any components, which enables to get direct access to V-stay for disassembly and annual check (maintenance) purposes, as on conventional axles. In a variant, the electric motor(s) of the wheel drive unit is (resp. are) located in front of the differential, that is on the front side along the longitudinal direction of the vehicle.

All in all, this wheel drive unit offers an enhanced compacity. It allows an easier/faster packaging in many different truck layouts. It also provides easier Aftermarket maintenance (larger space). More space is also available for other components (batteries...).

Also, force balancing between gears allows for smaller bearings. The wheel drive unit can also be equipped with smaller components with lower dynamic inertia. Few bearings are rotating in cruise. Besides, smaller components allow for dry sump transmission without scavenging pump and with good ground clearance.

On top of that, 3 gear ratios are provided in one planetary train. A free wheel/disconnection is achieved without gear mesh remaining (extremely low drag).

Aluminum housings can be used thanks to force balancing. In addition, the extreme compacity of the design makes it possible to use small and consequently light components/parts. Besides, Aluminum housings can be manufactured from cost efficient machining and no painting is required. Moreover, there is no part shimming (assuming unitized bearing for the only tapered roller bearing set).

Plus, this new design requires only simple assemblies with sliding differential. It has the capability to be scalable towards customer needs and future technologies. It is Feature optimized and cost optimized variants. It is ready for 'torque vectoring' and enables to fit an integrated high-speed hydraulic retarder.

Additional features and advantages are disclosed in the following description, claims, and drawings, and in part will be readily apparent therefrom to those skilled in the art or recognized by practicing the invention as described herein.

### BRIEF DESCRIPTION OF THE DRAWINGS

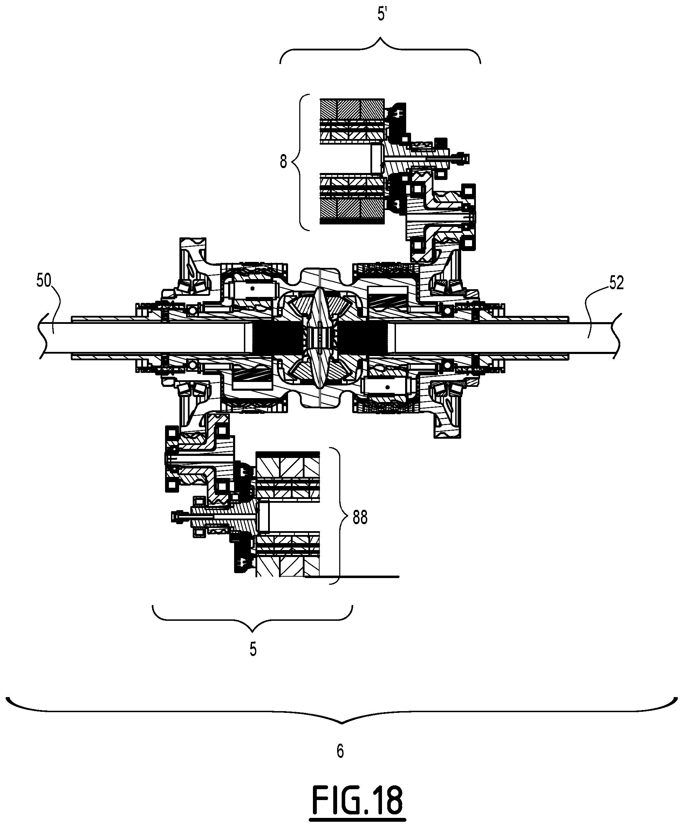

With reference to the appended drawings, below follows a description of embodiments, while only Fig.18 depicts an axle falling within the wording of claim 1.
**FIG. 1** is an exemplary perspective view of a heavy-duty vehicle, e.g. a truck, according to one example.
**FIG. 2****.** is an exemplary perspective view of an electric rear axle belonging to the vehicle of **FIG. 1****.**
**FIG. 3** is a side section view of the axle of **FIG. 2****.**

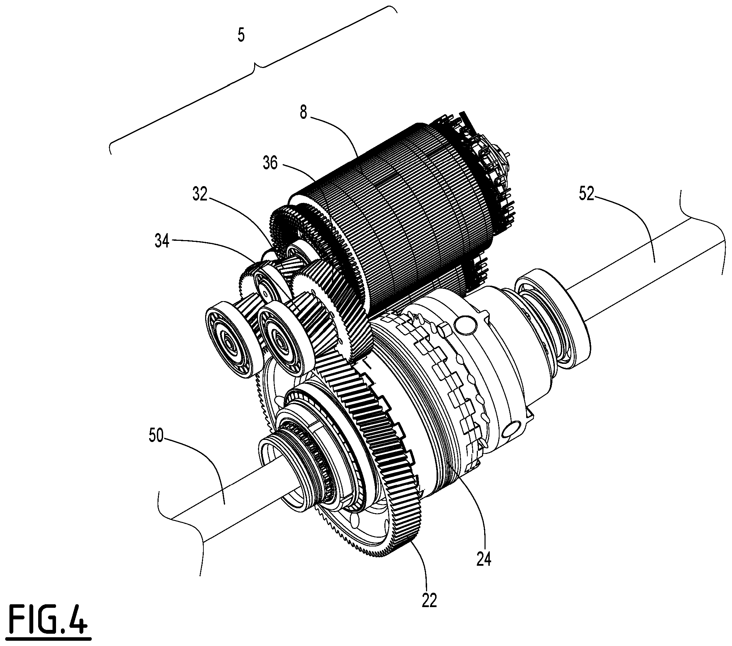

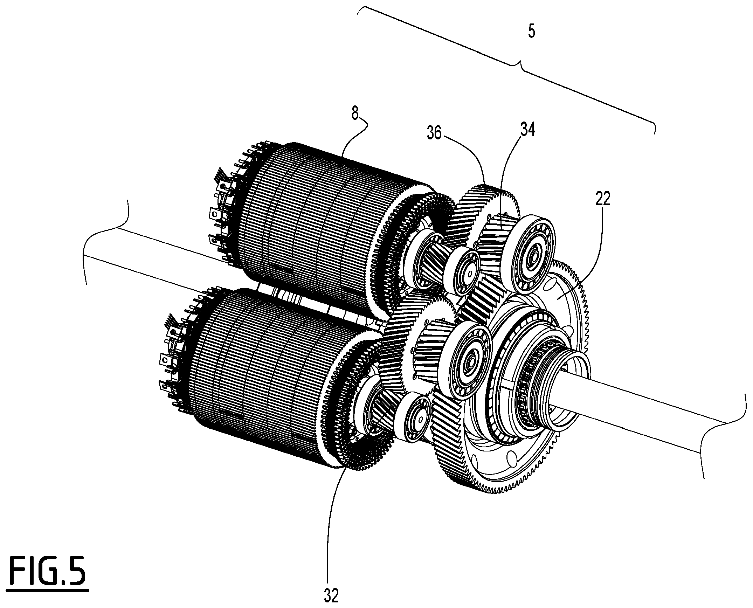

**FIG.4** and **5** are perspective views of the transmission system between electric motor(s) and gearbox of the axle.
**FIG. 6** is a longitudinal section of **FIG. 4****.**
**FIG. 7** is an enlarged view according to rectangle VII of **FIG. 6****.**

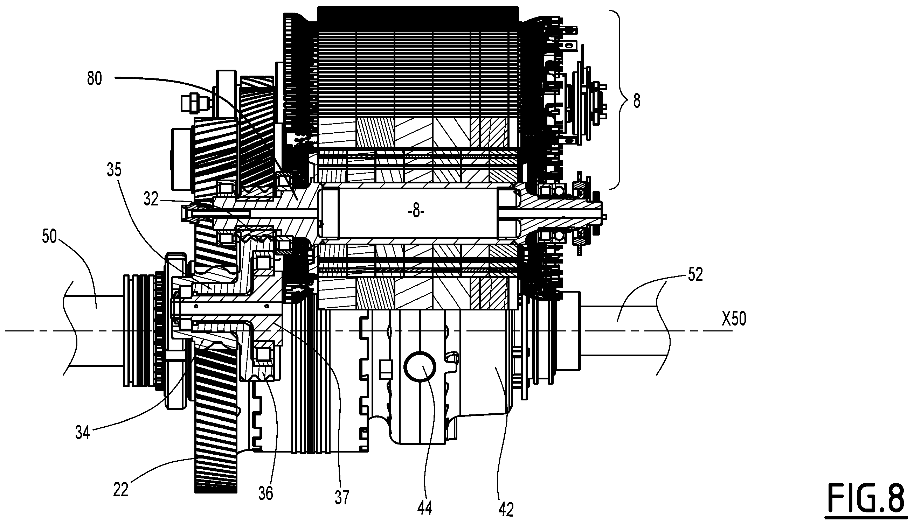

**FIG. 8** is another longitudinal section of the axle.
**FIG. 9** and **10** are section views of the gearbox in a first configuration.
**FIG. 11** and **12** are section views of the gearbox in a second configuration.
**FIG. 13** and **14** are section views of the gearbox in a third configuration.
**FIG. 15** is a section of the gearbox.
**FIG. 16** and **17** are enlarged views of **FIG. 15****.**
**FIG. 18** represents an axle provided with two wheel drive units according to a second embodiment.
**FIG. 19** represents two wheel drive unit according to a third embodiment.

### DETAILED DESCRIPTION

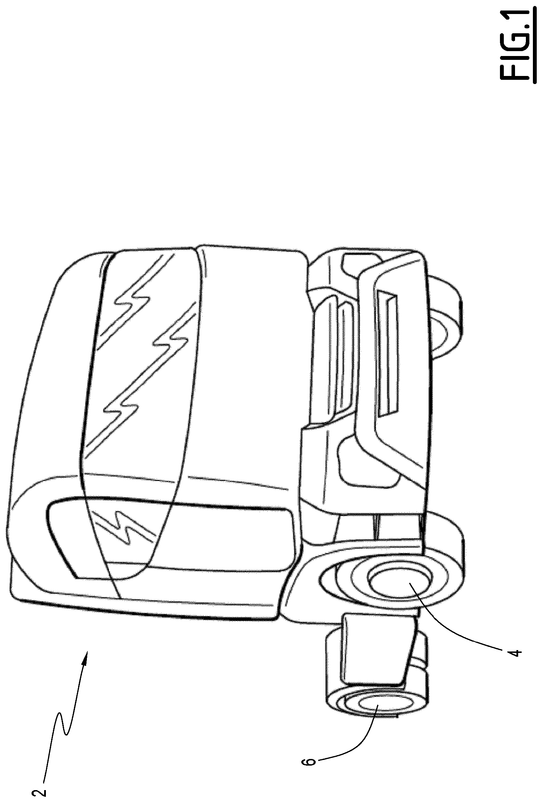

FIG. 1 is an exemplary perspective view of a heavy-duty vehicle 2. According to this example, the heavy-duty vehicle 2 is a truck. Alternatively, it can be any other heavy-duty vehicle such as a bus, an armored/military vehicle or construction equipment such as a wheel loader, a rigid or articulated hauler.

The vehicle 2 includes a front axle 4 and a rear axle 6, according to a 4*2 (or 4 by 2) configuration, which means that only the wheels of rear axle are driven. Obviously, many other configurations can be implemented, such as a 6 by 2 or a 6 by 4 configuration. Also, all wheels can be driven, e.g. according to a 4 by 4 configuration.

In the example, vehicle 2 includes a wheel drive unit or system 5 that is designed to be fitted on a chassis of the vehicle (not shown). More precisely, the wheel drive unit 5 is designed to be fastened to a suspension system which, itself, is fastened to the chassis, e.g. to one or both longitudinal steel beams/rails of the chassis, using fasteners such as bolts. The wheel drive unit is to be considered as independent/removable from the rest of the vehicle, like a spare part. The wheel drive unit is designed for driving one or more wheels in rotation. Accordingly, the wheel drive unit 5 includes at least one wheel shaft 50, 52, at the end of which is provided a wheel hub. In a variant not shown, the wheel shaft could be used to drive something other than a wheel. For instance, the wheel shaft 50, 52 could be used to drive a boat propeller or a track roller (for construction equipment). This means that the wheel drive unit can be used for other applications than vehicles on wheels.

According to a first embodiment, not falling within the wording of claim 1, the wheel drive unit 5 is part of an axle, e.g. the rear axle 6, which is therefore designated as an 'e-axle' corresponding to an axle that directly supports the wheel drive unit. This is in opposition with traditional configurations wherein the wheel drive unit is often remote from the rear axle and wherein a propeller shaft is used for transmitting the torque. The wheel drive unit 5 comprises at least one electric motor 8, capable of generating a motor torque.

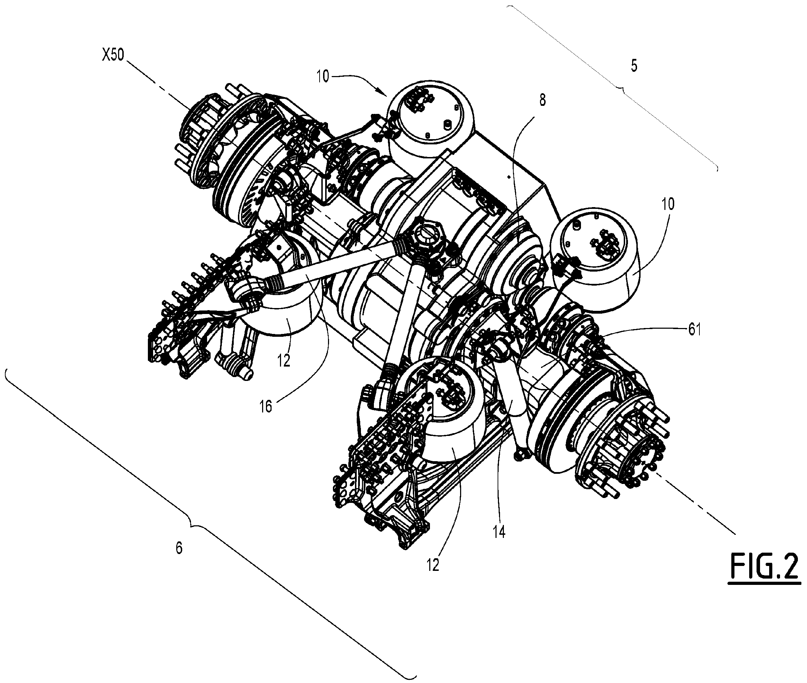

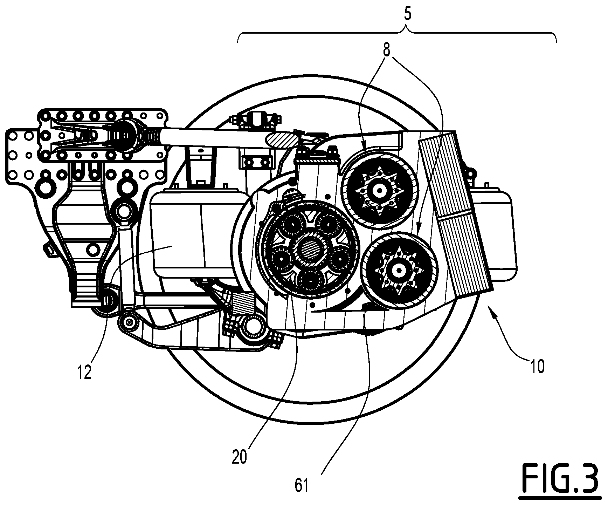

In one example, the wheel drive unit 5 also includes two wheel shafts 50, 52 and a differential 40 for distributing the torque to the two wheel shafts 50, 52. Preferably, and as shown on fig. 2 and 3, the wheel drive unit 5 comprises two electric motors 8. The rotation axes of the two wheel shafts are coincident/superimposed, the rotation axis of the two wheel shafts being designated as X50.

Preferably, differential 40 includes a differential housing 42.

The wheel drive unit 5 also includes a gearbox 20 for transmitting the torque of the motor(s) to the two wheel shafts 50 and 52, indirectly through the differential 40. Preferably, the gearbox 20 is provided with one, two or three speed ratios. Obviously, gearbox 20 is automatic, which means that the gears are shifted automatically as a function of torque demand on wheels and/or vehicle speed to adapt to driving conditions.

The wheel drive unit 5 also includes a transmission system between the electric motor(s) 8 and the gearbox 20. The transmission system is configured to transmit the motor torque generated by the electric motor(s) 8 to the gearbox 20.

In the example, each one of the two wheel shafts 50, 52 is connected to a wheel hub to which is fixed a wheel rim which, itself, supports a tyre. In other words, each wheel shaft 50, 52 extends between the differential 40 and a wheel hub.

The electric motor(s) 8 extend(s) parallel to the wheel shaft(s) 50, 52, which means that the rotation axis of each motor is parallel to the wheel shaft rotation axis X50. Needless to say that the rotation axis of the electric motor to which it is referred to is the rotation axis of output shaft/rotor. As a result, the electric motor(s) 8 extend(s) transversally (and horizontally) in the vehicle reference frame (the longitudinal direction being the vehicle movement direction front/rear). The advantage is that the electric motors 8 can benefit from the whole spacing between the two longitudinal beams, without requiring much space in the longitudinal direction.

In the example, the axle 6 comprises an axle body/housing 61 inside which are received the two wheel shafts 50, 52 and a suspension system attached to said axle body 61. Axle body 61 is only partially visible on the figures, e.g. on FIG. 3 and 15 to 17 for clarity/conciseness purpose. The suspension system ensures the connection/link between the axle 6 and the vehicle chassis consisting of two longitudinal steel beams. In the example, and as it is quite common on heavy-duty vehicles, the suspension system is pneumatic: It includes at least one air bellow at each (longitudinal) end of the axle. Preferably, four air bellows are provided, respectively two front air bellow 12 and two rear air bellow 10. The four air bellows each comprise a top interface for attachment to the chassis.

Such suspension system is well known from one skilled in heavy-duty vehicles architecture/structure, which is why no further details are given herein. According to the embodiment of FIG. 2, the suspension system includes two connecting rods hinged at one end, so as to form a so called 'V-stay' 16. A 4-air bellow suspension is a non-reactive suspension, which means that torque reaction does not generate suspension movements as the resisting torques are taken/absorbed by the V-stay 16 and reaction rods. It does not pass through the air bellows. A 4-air bellow suspension allows provides higher comfort regardless of the axle load is (by adjusting air pressure). A 4-air bellow suspension also enables a vertical chassis height adjustment (almost as it is a parallelogram movement) that can be used to adjust the truck height at a loading deck and to dock/undock trailers.

On top of that, the suspension system includes a shock absorber or damper 14 visible on Figures 2 and 3. In the example, the shock absorber 14 is a hydraulic cylinder.

Advantageously, each electric motor 8 is closer to the wheel shaft(s) rotation axis X50 than each rear air bellow 10. This means that the distance, measured radially, between the wheel shaft rotation axis X50 and the rear air bellow 10 is greater than the distance, measured radially, between the wheel shaft rotation axis X50 and the electric motor(s) 8. In addition, the electric motors 8 are located behind the rear air bellow 10 according to transversal direction, which means that the rear air bellow 10 acts, together with the tyre, as a shield/protection for the electric motor(s) 8 in case of a side crash. Besides, and since the two rear air bellows are located behind the electric motor(s) (far away from wheel shafts), they also act as protection members in case of a crash with a following vehicle or rear obstacle as the air bellows would get hit first and absorb kinetic energy.

Also, the electric motors 8 do not occupy much space in the vehicle longitudinal direction, which means that it leaves some space/room between the two chassis longitudinal beams, e.g. for fitting aftermarket elements or Bodybuilder.

In the example, the two electric motors 8 are fitted at the same distance from the wheel shaft rotation axis X50, resulting in that the two electric motors 8 are approximately fitted one above the other.

Advantageously, the transmission system to which it is referred to above consists of a gear train. For example, the gear train provides at least two reduction stages.

According to one example, the gear train includes a first pinion gear 32 provided on a motor output shaft 80 and an intermediate shaft 37 supporting a second and a third pinion gear, resp. 36 and 34. Second pinion gear 36 meshes with first pinion gear 32 and third pinion gear 34 meshes with an input gear 22 of the gearbox 20 (also known as the 'main gear').

Obviously, in case two electric motors are provided, as for the configuration of FIG. 2 and 3, a first pinion gear 32 is provided of the output shaft 80 of each motor 8 and two intermediate shafts 37 are provided, resp. one for each motor 8. Accordingly, there is a first, second and third pinion gear, resp. 32, 36 and 34, for each motor. All third gears 34 mesh with one and the same input gear 22 of the gearbox 20, which means that the motors 8 are spatially arranged around the input gear 22 of the gearbox 20.

Preferably, second and third pinion gears, resp. 36 and 34, are rotationally fixed one to the other.

According to one embodiment, second and third pinion gears, resp. 36 and 34, are arranged side by side along a rotation axis of intermediate shaft 37. In detail, second pinion gear 36 has a greater/larger diameter than third pinion gear 34. Also, third pinion gear 34 is fitted around a smooth sleeve 35 that is, in the example, integral with the second pinion gear 36. This smooth sleeve 35, which is itself fitted around the intermediate shaft 37, forms a shoulder with the second pinion gear 36, of larger diameter.

Preferably, the gearbox 20 is a planetary gear train. As a result, it includes a sun gear 25, planet gears 21 and a ring gear 24. Gearbox 20 also includes a fixed housing/casing encapsulating the elements of the planetary gear train.

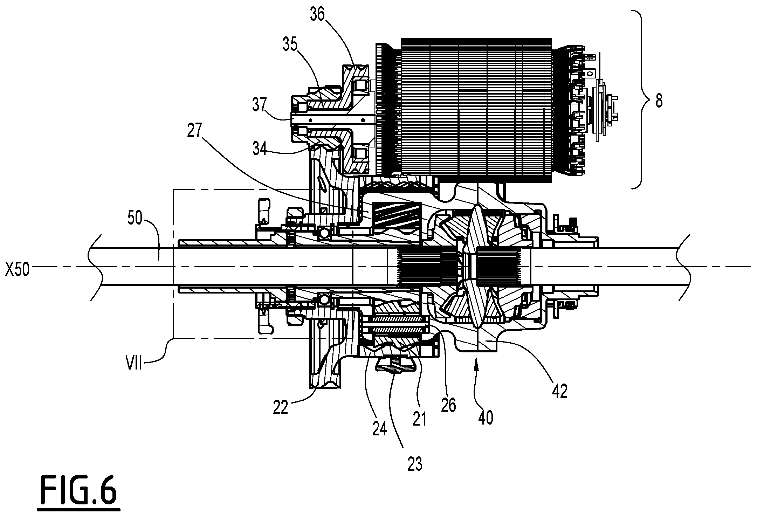

In the example, there are five planet gears 21 but obviously more or less planet gears can be provided. Planet gears 21 mesh with the sun gear 25 and ring gear 24. They are spatially arranged between sun gear 25 and ring gear 24. Planet gears 21 are each fitted on a shaft/pin 26 that belongs to a planet carrier 27 and can each spin around said shaft 26. In the example, ring gear 24 can be moved axially, which means that it is slidable along a direction parallel to its central/rotation axis. In other words, ring gear 24 slides onto planet gears 21. As shown on FIG. 6, an actuating element 23 is provided. This actuating element 23 is ring-shaped and is fitted inside an external groove of ring gear 24, so that element 23 can push the ring gear 24 in one direction or the other.

In the example, planet carrier 27 can be considered as the output element of the gearbox and input gear 22 can be considered as the input element of the gearbox.

Preferably, the rotation axis of sun gear 25 is superimposed/coincident with the rotation axis of input gear 22. The rotation axis of input gear 22 is superimposed/coincident with the rotation axis of planet carrier 27. The rotation axis of planet carrier 27 is superimposed/coincident with the rotation axis of the wheel shaft(s) X50. As a result, rotation axis of planet carrier 27 is superimposed/coincident with rotation axis of differential input element, e.g. differential cross 44. All in all, this means that the gearbox/planetary drive train is fitted concentrically around the wheel shaft 50 and/or 52.

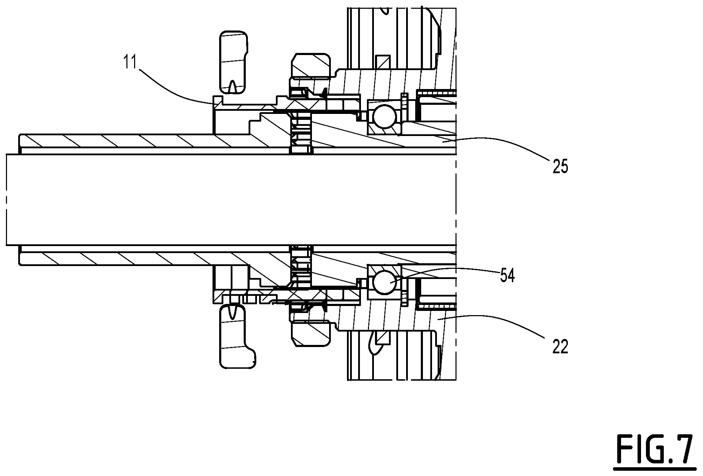

In the example of FIG. 7, a 4-point contact ball bearing 54 is radially arranged between the sun gear 25 and input gear 22. Preferably, the input gear 22 is pivotably attached to the gearbox housing 61. This input gear 22 takes/withstands the axial forces from the sun gear mesh thanks to the 4-point contact ball bearing 54 acting as a bidirectional thrust. Both axial loads (from input gear mesh and from sun gear being designed to counteract. The sun gear centering (radial loads) is achieved by the planet gear teeth and the clutch mechanism. This arrangement allows to have only one bearing to support sun gear, allowing to save mass, cost, space and efficiency. It also reduces the system hyper statism and releases production tolerances.

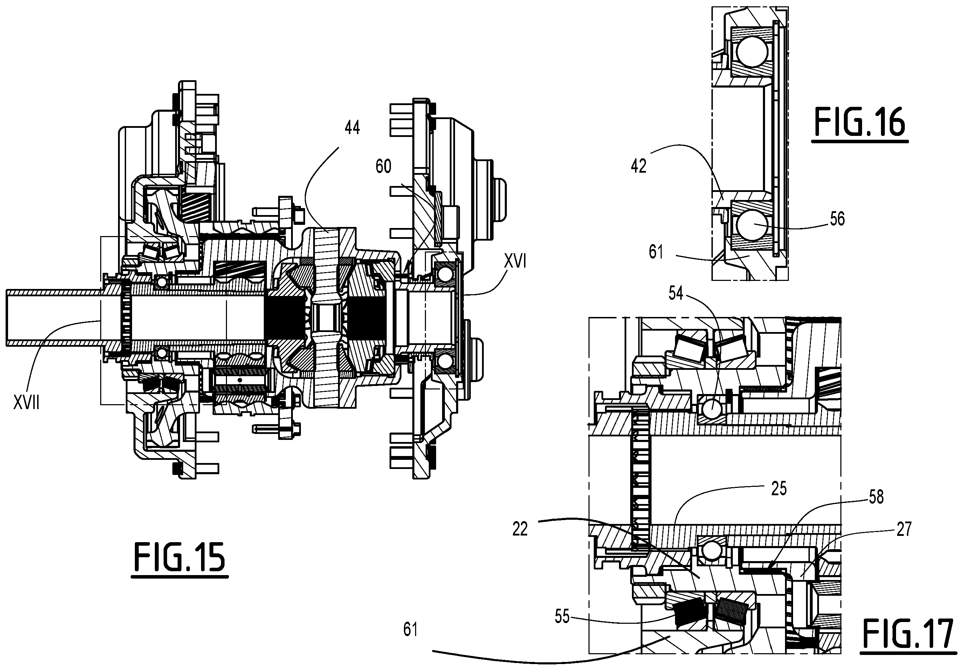

According to one example shown on FIG. 17, a double row tapered roller bearing 55 is fitted between the input gear 22 and the axle housing/body 61. This allows to completely remove the shimming from the assembly, ensures manufacturing efficiency and reliability, and makes the system easier to scale up and to regionalize. In variant, the double row tapered roller bearing 55 could be replaced by two unitized bearing (e.g. pre-set bearings).

According to a variant shown on FIG. 18, the design of input gear 22 is such that it allows replacing the double row tapered roller bearings by two tapered roller bearings fitted on each (axial) side of input gear. This makes the input gear straighter but adds preload complexity for the bearings and another housing slice.

Preferably, a needle roller bearing 58 is provided radially between the sun gear 25 and the planet carrier 27. The needles of such needle roller bearing 58 enable to radially support the differential mass on one side. As shown on FIG. 15 and 16, a ball bearing 56 is provided on the other side, such ball bearing 56 ensuring, on top of supporting differential mass, to hold the differential 40 in position in transversal direction (transversally). In detail, ball bearing 56 is arranged radially between differential housing 42 (rotating) and axle body 61 (non-rotating).

Advantageous, the fact of having a needle roller bearing 58 between the input gear 22 and the differential housing/planet carrier 27, allows to slide the differential unit/assembly into the input gear, without the need to add any stop. This simplify a lot the assembly, and contributes to the compacity of the system as the differential 40 is held in position by the ball bearing 56 on the other side

The 4-point contact ball bearing 54, the ball bearing 56 and the needle roller bearing 58 are non-preloaded bearings that are particularly visible on FIG. 16 and 17.

Preferably, the differential 40 to which it is referred to is mounted 'floating' inside axle body and therefore can be assimilated to a 'floating' differential. Basically, the differential 40 forms a single unit with the gearbox 20 as the differential housing 42 is fixed to planet carrier 27. As a result, the differential forces are transmitted through the planetary carrier (same component as differential housing 42). This assembly is subjected only to 'pure' torque, even if it's the system which sees/supports the highest forces (the closest to the wheel), its bearings only have to support its mass. Instead of using two big taper roller bearings which are costly, heavy, pre-loaded and non-efficient, it can be supported by non-preloaded bearings, cheaper, more efficient and simpler to integrate.

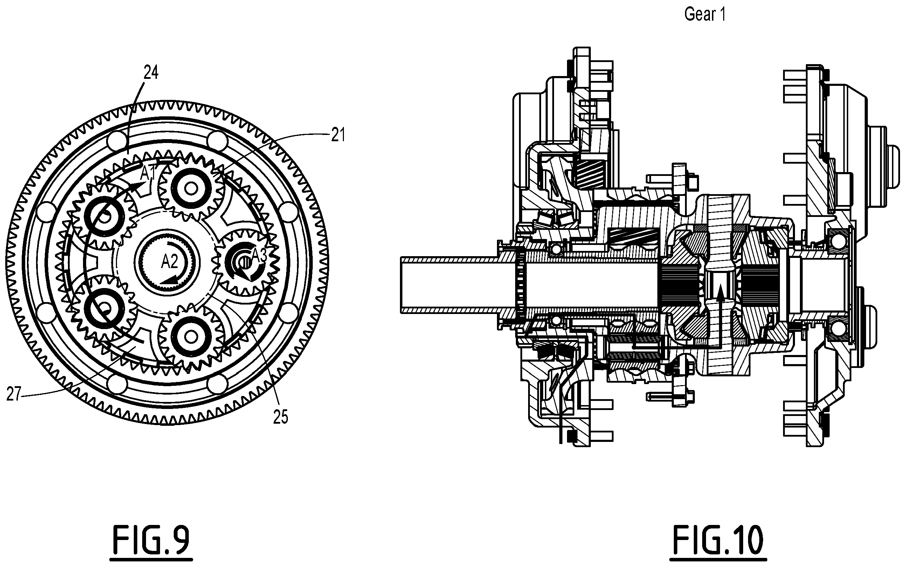

A first configuration in which a first gear ratio ('Gear 1') is engaged is represented on FIG. 9 and 10. In such configuration, input gear 22 drives the sun gear 25 in rotation (Cf. arrow A2). Ring gear 24 is moved/located in a position (on the right on figure 10) in which it is engaged/coupled to the gearbox housing. As a result, the rotation of the ring gear 24 is locked, which forces the planet gears 21 to spin (Cf. arrow A3) and the planet carrier 27 to rotate in the same direction as the sun gear 25 (Cf. arrow A1).

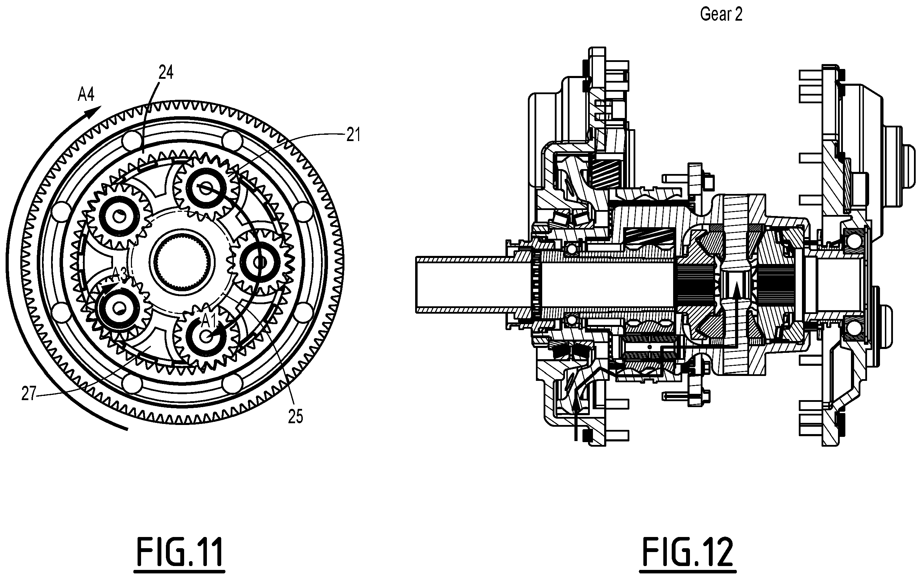

A second configuration in which a second gear ratio ('Gear 2') is engaged is represented on FIG. 11 and 12. In such configuration, ring gear 24 is axially moved/located in a position (on the left on figure 12) in which it engages with input gear 22. As a result, ring gear 24 is in a position where it can be driven by the ring gear 24 in rotation. Ring gear 24 rotates (Cf. arrow A4). The rotation of the sun gear 25 is locked, which forces the planet gears 21 to spin (Cf. arrow A3) and the planet carrier 27 to rotate in the same direction as the ring gear 24 (Cf. arrow A1).

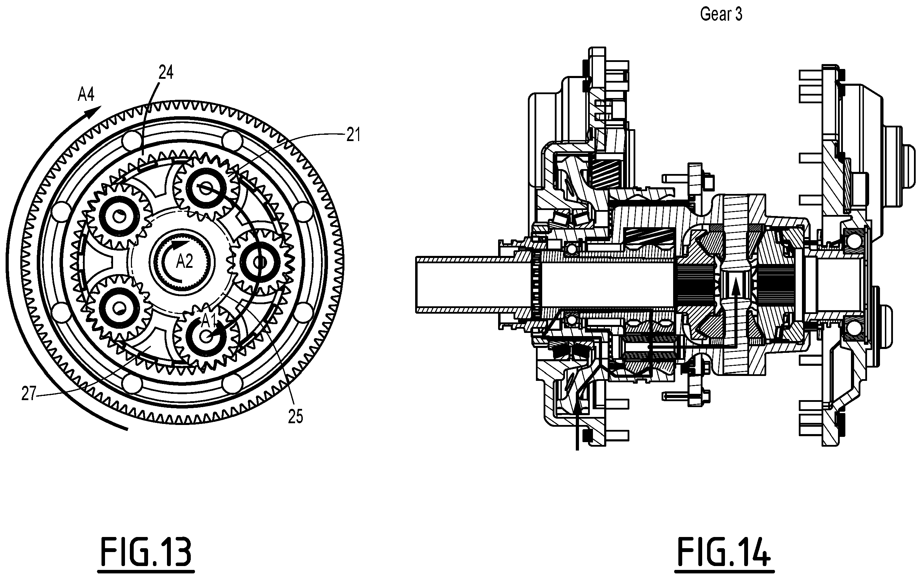

A third configuration in which a third gear ratio ('Gear 3') is engaged is represented on FIG. 13 and 14. In such configuration, ring gear 24 is the same position/configuration as for 'Gear 2': It engages with input gear 22, the rotation of which can therefore be transmitted to ring gear 24. As a result, input gear 22 drives both the sun gear 25 and the ring gear 24 at the same rotation speed (Cf. arrows A2 and A4 respectively). This involves that the planet gears 21 do not spin and forces the planet carrier 27 to rotate in the same direction (Cf. arrow A1). This configuration is also known as 'Direct drive' because the rotation speed of the gearbox input element is equal to the rotation speed of the gearbox output element.

Typically, 1^{st} gear ratio can be used in situation where a high torque is to be delivered to the wheels, such as at low speed and/or starting.

2^{nd} gear ratio can be used for mid-range speed.

3^{rd} gear ratio ('Direct drive') can be used in cruising conditions, e.g. when moving on highways or the like.

Advantageously, the three different gear ratios can be selected using two separate clutches, e.g. dog clutches.

In the example, a first dog clutch is provided between the input gear 22 and the ring gear 24. In coupled configuration (dog clutch in a closed position), the ring gear 24 (which can be moved axially) is forced into a first position in which it is rotationally coupled to the input gear 22. In detail, splines or teeth of input gear 22 are engaged into corresponding grooves or teeth of ring gear 24. In an uncoupled configuration, (dog clutch open), the ring gear 24 is forced into a second position in which it is axially remote from the input gear 22 and in which it is not driven (locked).

Also, a second dog clutch is provided between the input gear 22 and the sun gear 25. As shown on FIG. 7, said second dog clutch includes a control ring 11 whose central axis is coincident/superimposed with that of input gear 22 and sun gear 25. Control ring 11 is moveable in translation. In detail, a fork (partially shown) enables to move control ring 11 in translation. Said fork includes two branches whose ends are fitted into a radial groove of the control ring. Slides, preferably frictionless slides, are provided at the ends of the fork branches to allow a free rotation of the control ring 11. Control ring 11 includes splines or the like on its radial internal surface, in order to engage with corresponding splines or grooves of the sun gear 25. Advantageously, control ring 11 includes splines or the like on its radial external surface, in order to engage with corresponding splines or grooves of the input gear 22.

In a closed configuration of this second dog clutch, the control ring 11 is moved into a position in which it engages simultaneously with the sun gear 25 and input gear 22, thereby transmitting the rotation of input gear 22 to the sun gear 25. In the open configuration of this second dog clutch, the control ring 11 is moved axially away from the sun gear 25, so that it does not drive the sun gear 25 in rotation. Preferably, control ring 11 is also disconnected from input gear 22. As a result, sun gear 25 remains immobile (Non-driven).

In a variant not shown, control ring is fixed in rotation with sun gear 25. According to a first configuration ('Gear 1'), control ring is forced into a position in which it is engaged with input gear 22, thereby driving the sun gear 25 from the rotation of input gear 22. In a second configuration ('Gear 2'), control ring is forced into a position in which it is engaged with the gearbox housing, the rotation of control ring being locked/blocked. As a result, sun gear is also kept immobile (non-driven). In a third configuration ('Gear 3'), control ring is forced into a position in which it is engaged with input gear 22, thereby driving the sun gear 25 from the rotation of input gear 22. In a neutral configuration, control ring is forced into a free position in which it neither engages with the sun gear, nor gearbox housing. In a preferred embodiment, control ring is a single part/component but in variant(s), it could be made of two or more separate components.

Advantageously, the gearbox 20 includes a neutral/freewheel configuration in which the first and second clutches are open, thereby disconnecting the input gear 22 from the sun gear 25 and from the ring gear 24. In such configuration, ring gear 24 is in an intermediate/free position in which it is neither engaged with gearbox housing nor input gear 22. As a result, a rotation of the wheel shaft(s) 50, 52 cannot be transmitted to the input gear 22. In such freewheel configuration, only the three bearings 54, 56 and 58 are rotating, which means no gear mesh and no splash losses.

In a variant not shown, the gearbox only includes two speed ratios. For instance, this can be achieved by having a fixed connection/coupling between the input gear 22 and sun gear 25. As a result, only one clutch would remain for actuating/moving the ring gear 24. This could be done for 6x4 trucks or Medium-Duty applications (and results in having only the start and cruise gears) in order to save even more mass and cost.

As it is well known from one skilled in the art, these clutches can be automatically actuated, e.g. electrically actuated or pneumatically/hydraulically actuated.

In the example, the planet carrier 27 of the gearbox 20 is fixed in rotation with the differential housing 42. In detail, the differential assembly 40 includes a differential cross 44 composed of four identically designed pins joining at the center of the differential cross. In this specific example, the differential cross 44 is fixed in rotation with the differential housing 42, which therefore rotates in normal operating conditions.

Obviously, this differential example is one design among others: In some variants, the differential assembly can be different. For instance, the differential assembly could include a crown wheel meshing with a drive pinion which, itself, would be driven by the planet carrier 27.

As shown on FIG. 15, a differential lock mechanism 60 is provided. This differential lock mechanism 60 is described in European patent No. EP23160898.5 incorporated herein, which is why no further details are given in relation to this differential lock mechanism.

FIG. 18 shows a second embodiment, which is covered by the invention as defined in claim 1, and in which the axle 6 comprises two wheel drive units 5 and 5'. The two wheel drive units 5 and 5' are identical or similar to the one of first embodiment, with the exception that each wheel drive unit 5, 5" includes only one electric motor (But it could include two or more motors each). Similarly, the gearbox can be different: More or less gear ratios can be provided. For instance, it is possible to have a 2-speed gearbox on the left and a 3-speed gearbox on the right. Each wheel drive unit comprises its own gearbox and its own transmission. The two gearboxes are connected to one and the same differential assembly, which means that the two wheels can be driven using only one of the two electric motors. Another main benefit is that power transmission can be conserved during gearshift (which is known as 'powershifting'): Indeed, when shifting gear on one side, gearbox can be kept engaged on the other side in order to keep torque to the wheel/differential. As a result, the driver does not even feel that gear is shifted, which improves driving comfort.

Considering that the two gearboxes each have three speed ratios, the combination of the two enables to reach at least 6 different speed ratios (1-1, 1-2, 1-3, 2-2, 2-3, 3-3). Obviously, more than 6 combinations can be obtained if the two gearboxes have different speed ratios. Also, additional combinations can be obtained by setting one gearbox to neutral.

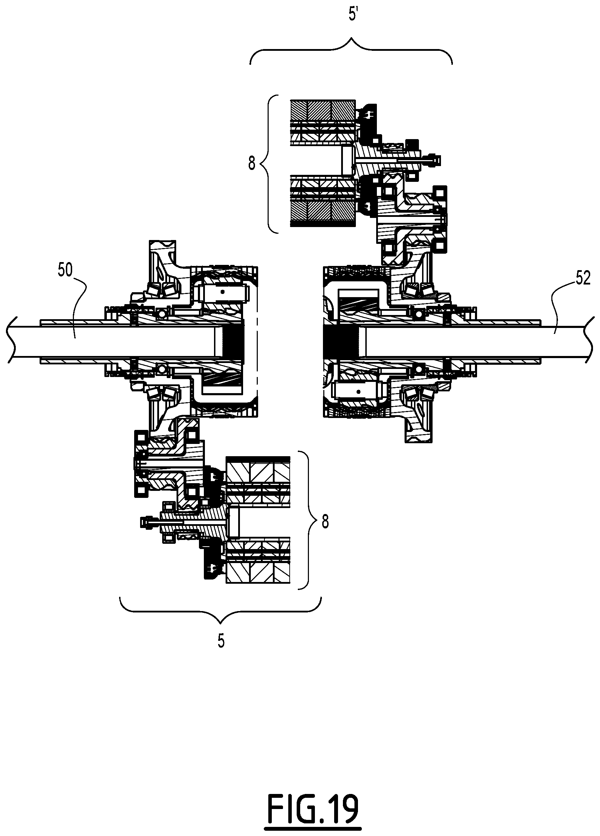

FIG. 19 shows a third embodiment, which is not covered by the subject-matter of the claims, in which two separate wheel drive units 5 and 5' are provided, respectively one drive unit 5, 5' for each wheel. According to this configuration, which is known as 'Torque vectoring', a direct connection is provided between the gearbox and the wheel shaft, which means that there is no differential assembly and no axle per se. In detail, the planet carrier 27 of the gearbox 20 can be rotationally fixed/coupled to the wheel shaft 50 or 52. Advantageously, a clutch, e.g. dog clutch, can be provided between the gearbox planet carrier 27 and wheel shaft 50 or 52, which means that planet carrier 27 drives the wheel shaft 50 or 52 only in operating conditions when clutch is closed. In a variant, planet carrier 27 can be permanently coupled to wheel shaft without any clutch in-between.

Preferably, each wheel drive unit comprises its own suspension system to be attached/fastened to the vehicle chassis.

Optionally, the wheel drive unit further comprises a high-speed retarder, e.g. a hydraulic retarder.

As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present inventior as defined by the claims

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

## Claims

1. An axle (6) for a heavy-duty vehicle (2), the axle comprising an axle body (61) inside which is received a differential assembly (40) through which two wheel shafts (50, 52) can be driven and two wheel drive units (5),
wherein each wheel drive unit (5) is to be fitted on a chassis of the heavy-duty vehicle (2) wherein each wheel drive unit (5) comprises at least one electric motor (8), capable of generating a torque, wherein a rotation axis of the at least one electric motor of each wheel drive unit (5) is parallel to that of the two wheel shafts (50, 52);
**characterized in that** each wheel drive unit (5) comprises:
- a gearbox (20), and
- a transmission system between the at least one electric motor and the gearbox (20), the gearbox being arranged between the transmission system and the differential assembly (40),
wherein the transmission system of each wheel drive unit (5) consists of a gear train;
and
wherein the gearbox (20) of each wheel drive unit (5) is fitted concentrically around the two wheel shafts (50, 52).

2. Thea axle (6) of claim 1, wherein the gear train of each wheel drive unit (5) comprises two or more reduction stages.

3. The axle (6) of claim 1 or 2, wherein, for each wheel drive unit (5), the gear train includes a first pinion gear (32) provided on a motor output shaft (80) and an intermediate shaft (37) comprising a second (36) and a third pinion gear (34) and wherein the second pinion gear (36) meshes with the first pinion gear (32) and the third pinion gear (34) meshes with an input gear (22) of the gearbox.

4. The axle (6) according to claim 3, wherein, for each wheel drive unit (5), the second (36) and the third pinion gears (34) are rotationally fixed one to the other.

5. The axle (6) according to claim 3 or 4, wherein, for each wheel drive unit (5), the second (36) and third pinion gears (34) are arranged side by side along the intermediate shaft (37).

6. The axle (6) according to any previous claim, wherein each wheel drive unit (5) further comprises a second electric motor.

7. The axle (6) of any previous claim, wherein the gearbox (20) of each wheel drive unit (5) is a planetary gear train.

8. The axle (6) according to any preceding claim, wherein each wheel drive unit (5) further comprises a high-speed retarder, e.g. a hydraulic retarder.

9. The axle (6) according to any previous claim, wherein each wheel drive unit (5) further comprises a suspension system to be attached to the vehicle chassis, wherein each suspension system includes at least one air bellow (10, 12) and wherein, for each wheel drive unit (5), the at least one electric motor (8) is closer to the two wheel shafts (50, 52) rotation axis (X50) than each air bellow (10, 12).

10. The axle (6) according to any previous claim, wherein the gearbox (20) of each wheel drive unit (5) comprises at least two or three speed ratios and preferably a neutral configuration.

11. A heavy-duty vehicle comprising an axle according to any one of claims 1-10.

## Patentansprüche

1. Eine Achse (6) für ein Schwerlastfahrzeug (2), wobei die Achse einen Achskörper (61) umfasst, in dem eine Differentialanordnung (40) aufgenommen ist, durch die zwei Radwellen (50, 52) angetrieben werden können, und zwei Radantriebseinheiten (5),
wobei jede Radantriebseinheit (5) an einem Fahrgestell des Schwerlastfahrzeugs (2) anzubringen ist, wobei jede Radantriebseinheit (5) umfasst:
- mindestens einen Elektromotor (8), der in der Lage ist, ein Drehmoment zu erzeugen, wobei eine Rotationsachse des mindestens einen Elektromotors jeder Radantriebseinheit (5) parallel zu derjenigen der zwei Radwellen (50, 52) ist;
**dadurch gekennzeichnet, dass** jede Radantriebseinheit (5) umfasst:
- ein Getriebe (20), und
- ein Übertragungssystem zwischen dem mindestens einen Elektromotor und dem Getriebe (20), wobei das Getriebe zwischen dem Übertragungssystem und der Differentialanordnung (40) angeordnet ist, wobei das Übertragungssystem jeder Radantriebseinheit (5) aus einem Zahnradtrieb besteht, und wobei das Getriebe (20) jeder Radantriebseinheit (5) konzentrisch um die zwei Radwellen (50, 52) herum angebracht ist.

2. Die Achse (6) nach Anspruch 1, wobei der Zahnradtrieb jeder Radantriebseinheit (5) zwei oder mehr Untersetzungsstufen umfasst.

3. Die Achse (6) nach Anspruch 1 oder 2, wobei für jede Radantriebseinheit (5) der Zahnradtrieb ein erstes Ritzel (32), das an einer Motorausgangswelle (80) vorgesehen ist, und eine Zwischenwelle (37), die ein zweites (36) und ein drittes Ritzel (34) umfasst, einschließt, und wobei das zweite Ritzel (36) mit dem ersten Ritzel (32) kämmt und das dritte Ritzel (34) mit einem Eingangszahnrad (22) des Getriebes kämmt.

4. Die Achse (6) nach Anspruch 3, wobei für jede Radantriebseinheit (5) das zweite (36) und das dritte Ritzel (34) drehfest miteinander verbunden sind.

5. Die Achse (6) nach Anspruch 3 oder 4, wobei für jede Radantriebseinheit (5) das zweite (36) und das dritte Ritzel (34) entlang der Zwischenwelle (37) nebeneinander angeordnet sind.

6. Die Achse (6) nach einem der vorhergehenden Ansprüche, wobei jede Radantriebseinheit (5) ferner einen zweiten Elektromotor umfasst.

7. Die Achse (6) nach einem der vorhergehenden Ansprüche, wobei das Getriebe (20) jeder Radantriebseinheit (5) ein Planetengetriebe ist.

8. Die Achse (6) nach einem der vorhergehenden Ansprüche, wobei jede Radantriebseinheit (5) ferner einen Hochgeschwindigkeitsretarder, z. B. einen hydraulischen Retarder, umfasst.

9. Die Achse (6) nach einem der vorhergehenden Ansprüche, wobei jede Radantriebseinheit (5) ferner ein an dem Fahrzeugfahrgestell anzubringendes Federungssystem umfasst, wobei jedes Federungssystem mindestens einen Luftfederbalg (10, 12) einschließt und wobei für jede Radantriebseinheit (5) der mindestens eine Elektromotor (8) näher an der Rotationsachse (X50) der zwei Radwellen (50, 52) liegt als jeder Luftfederbalg (10, 12).

10. Die Achse (6) nach einem der vorhergehenden Ansprüche, wobei das Getriebe (20) jeder Radantriebseinheit (5) mindestens zwei oder drei Übersetzungsverhältnisse und vorzugsweise eine Neutralstellung umfasst.

11. Ein Schwerlastfahrzeug, umfassend eine Achse nach einem der Ansprüche 1-10.

## Revendications

1. Un essieu (6) pour un véhicule poids lourd (2), l'essieu comprenant un corps d'essieu (61) à l'intérieur duquel est reçu un ensemble différentiel (40) par l'intermédiaire duquel deux arbres de roue (50, 52) peuvent être entraînés et deux unités d'entraînement de roue (5), dans lequel chaque unité d'entraînement de roue (5) est destinée à être montée sur un châssis du véhicule poids lourd (2), dans lequel chaque unité d'entraînement de roue (5) comprend :
- au moins un moteur électrique (8), apte à générer un couple, dans lequel un axe de rotation de l'au moins un moteur électrique de chaque unité d'entraînement de roue (5) est parallèle à celui des deux arbres de roue (50, 52) ;
**caractérisé en ce que** chaque unité d'entraînement de roue (5) comprend :
- une boîte de vitesses (20), et
- un système de transmission entre l'au moins un moteur électrique et la boîte de vitesses (20), la boîte de vitesses étant agencée entre le système de transmission et l'ensemble différentiel (40), dans lequel le système de transmission de chaque unité d'entraînement de roue (5) consiste en un train d'engrenages ; et dans lequel la boîte de vitesses (20) de chaque unité d'entraînement de roue (5) est montée concentriquement autour des deux arbres de roue (50, 52).

2. L'essieu (6) de la revendication 1, dans lequel le train d'engrenages de chaque unité d'entraînement de roue (5) comprend deux ou plusieurs étages de réduction.

3. L'essieu (6) de la revendication 1 ou 2, dans lequel, pour chaque unité d'entraînement de roue (5), le train d'engrenages comprend un premier pignon (32) prévu sur un arbre de sortie de moteur (80) et un arbre intermédiaire (37) comprenant un deuxième (36) et un troisième pignon (34) et dans lequel le deuxième pignon (36) engrène avec le premier pignon (32) et le troisième pignon (34) engrène avec un engrenage d'entrée (22) de la boîte de vitesses.

4. L'essieu (6) selon la revendication 3, dans lequel, pour chaque unité d'entraînement de roue (5), les deuxième (36) et troisième pignons (34) sont solidaires en rotation l'un de l'autre.

5. L'essieu (6) selon la revendication 3 ou 4, dans lequel, pour chaque unité d'entraînement de roue (5), les deuxième (36) et troisième pignons (34) sont agencés côte à côte le long de l'arbre intermédiaire (37).

6. L'essieu (6) selon l'une quelconque des revendications précédentes, dans lequel chaque unité d'entraînement de roue (5) comprend en outre un deuxième moteur électrique.

7. L'essieu (6) de l'une quelconque des revendications précédentes, dans lequel la boîte de vitesses (20) de chaque unité d'entraînement de roue (5) est un train d'engrenages planétaires.

8. L'essieu (6) selon l'une quelconque des revendications précédentes, dans lequel chaque unité d'entraînement de roue (5) comprend en outre un ralentisseur à grande vitesse, par exemple un ralentisseur hydraulique.

9. L'essieu (6) selon l'une quelconque des revendications précédentes, dans lequel chaque unité d'entraînement de roue (5) comprend en outre un système de suspension destiné à être fixé au châssis du véhicule, dans lequel chaque système de suspension comprend au moins un soufflet pneumatique (10, 12) et dans lequel, pour chaque unité d'entraînement de roue (5), l'au moins un moteur électrique (8) est plus proche de l'axe de rotation (X50) des deux arbres de roue (50, 52) que chaque soufflet pneumatique (10, 12).

10. L'essieu (6) selon l'une quelconque des revendications précédentes, dans lequel la boîte de vitesses (20) de chaque unité d'entraînement de roue (5) comprend au moins deux ou trois rapports de vitesse et de préférence une configuration neutre.

11. Un véhicule poids lourd comprenant un essieu selon l'une quelconque des revendications 1 à 10.
